# EUROPÄISCHE PATENTSCHRIFT

(11) **EP 0 945 330 B1**
(45) Veröffentlichungstag und Bekanntmachung des Hinweises auf die Patenterteilung: **27.10.2004**
(21) Anmeldenummer: 99105520.3
(22) Anmeldetag: 18.03.1999
(51) Int. Cl.: B62D 25/08

(54) **Quertraverse für ein Kraftfahrzeug**
Cross-beam for a motor vehicle body
Traverse avant pour véhicule automobile

(30) Priorität: 27.03.1998 DE 19813548
(43) Veröffentlichungstag der Anmeldung: 29.09.1999
(73) Patentinhaber: ADAM OPEL AG, 65423 Rüsselsheim (DE)
(72) Erfinder: Mildner, Udo, Dipl.-Ing.(FH), 65550 Limburg (DE); Winkler, Gerold, 65795 Hattersheim 1 (DE)
(74) Vertreter: Daniel, Ulrich W.P.

(56) Entgegenhaltungen:
- EP-A- 0 584 576
- DE-A- 4 223 948
- DE-A- 19 633 906
- DE-C- 4 336 030
- JP-A- 3 284 482
- US-A- 5 271 473

## Beschreibung

Die Erfindung bezieht sich auf einen Vorderban für ein Kraftfahrzeug nach dem oberbegriff der Anspruchs 1. Weiterhin bezieht sich die Erfindung auf Verfahren zum Zusammenban und zur Reparatur des Vorderbaus.

Ein gattungsgemäßer Vorderban ist in der DE 36 18 951 A1 beschrieben. Der mehrteilige Aufbau hat zur Folge, daß in einem Schadensfall lediglich die tatsächlich beschädigten Abschnitte der Traverse ausgetauscht werden brauchen. Problematisch ist allerdings die Anbindung einer solchen Traverse an den Vorderbau des Fahrzeuges. In der genannten DE-A1 wird vorgeschlagen, die Längsträger mit dem Mittelteil der Traverse zu verschrauben und die äußeren Kotflügelbleche mit den Seitenteilen. Die Positionierung der Quertraverse in Bezug zum Vorderbau definiert sich damit durch die Fixierung an den starren Längsträgern, wodurch in der Lage der Seitenteile zu den nachgiebigen Kotflügelblechen toleranzbedingte Abweichungen auftreten können. Da die vorderen Kanten der Kotflügelbleche die Streuscheiben der in den Seitenteilen eingesetzten Fahrzeugscheinwerfer zumindest teilweise einfassen, sind diese Abweichungen am ungleichmäßigen Spaltmaß zwischen Streuscheibe und Kotflügel zu erkennen.

Die Erfindung beruht somit auf der Aufgabe, eine Anbindung der Quertraverse zu realisieren, die einerseits eine kostengünstige Reparatur einer unfallgeschädigten Traverse und andererseits ein gleichmäßiges Spaltmaß zwischen den Kotflügeln und den Streuscheiben der Scheinwerfer gewährleistet.

Die Lösung der Aufgabe erfolgt durch einen Vordeban mit den Merkmalen des Anspruchs 1 bzw. Verfahren mit den Mekmalen der Ansprüche 8 bzw. 11.

Vorzugsweise wird die Quertraverse mit ihren Seitenteilen an den Längsträgern befestigt. Dies hat den Vorteil, daß zumindest bei einer kleinen Stauchung eines Längsträgers während eines Offsetcrash lediglich das jeweilige Seitenteil mitgenommen wird, so daß die Beschädigung der Quertraverse auf das Seitenteil begrenzt ist.

Außerdem wird vorgesehen, daß die Seitenteile mit den Längsträgern verschweißt sind, daß aber sowohl die Seitenteile als auch die Längsträger so ausgebildet sind, daß sie in einem Reparaturfall miteinander verschraubt werden können.

Dazu weisen die Längsträger Abschlußplatten auf, die einen entsprechend abgeflachten Bereich der Seitenteile kontaktieren. Wegen der Ausrichtung dieser Bereiche quer zur Fahrzeuglängsachse ermöglicht es diese Anordnung, die Quertraverse quer zum Vorderbau zu verschieben und in Bezug auf die Seitenwände auszurichten. Dazu werden die Führungsstifte in die entsprechenden Öffnungen der Verbindungsplatte eingeführt. Erst danach wird die Verbindung zwischen den Längsträgern und den Seitenteilen hergestellt, indem sie in den flächig aneinanderliegenden Bereichen miteinander verschweißt werden. Die Verschraubung der beiden Teile ist nur für den Fall vorgesehen, daß ein Seitenteil ersetzt werden muß.

An den den Längsträgern gegenüberliegenden Seiten der Seitenteile wird ein Stoßfängerträger befestigt, wobei zwischen dem Stoßfängerträger und den Seitenteilen Deformationselemente angeordnet sind.

Die Frontstruktur kann wie folgt montiert werden: Zunächst wird die Traverse gebildet, indem das Mittelteil mit den Seitenteilen verschraubt wird; anschliessend wird die Traverse an die mit den Seitenwänden verschweißten Verbindungsplatten angesetzt, wobei die Führungsstifte in die entsprechenden Führungen an der Verbindungsplatte eingeführt werden. Danach werden die Seitenteile mit den Längsträgern verbunden. Vorzugsweise werden die Seitenteile erst nach dem Lackieren der Karosserie mit den Verbindungsplatten verschraubt. Ggf. kann die Verschraubung aber auch vor dem Lackieren erfolgen.

Die Reparatur der Frontstruktur erfolgt nur in den beschädigten Abschnitten, indem die entsprechenden Schraubverbindungen gelöst werden. Falls ein Seitenteil ersetzt werden muß, werden die Schweißverbindungen zum jeweiligen Längsträger aufgebohrt und das Ersatzseitenteil mit den Längsträgern bzw. mit den Deformationselementen verschraubt.

Die Erfindung soll im folgenden anhand eines Ausführungsbeispiels näher erläutert werden. Dazu zeigen:
- Fig. 1: den Vorderbau eines Kraftfahrzeuges mit Seitenwänden, die nach vorne je- weils von einer Verbindungsplatte begrenzt sind, sowie mit einer an die Front des Vorderbaus anzusetzenden Quertraverse,
- Fig. 2: die Detaildarstellung einer der Verbindungsplatten und
- Fig. 3: die Verbindung zwischen der Verbindungsplatte, der Quertraverse und einem Kotflügel.

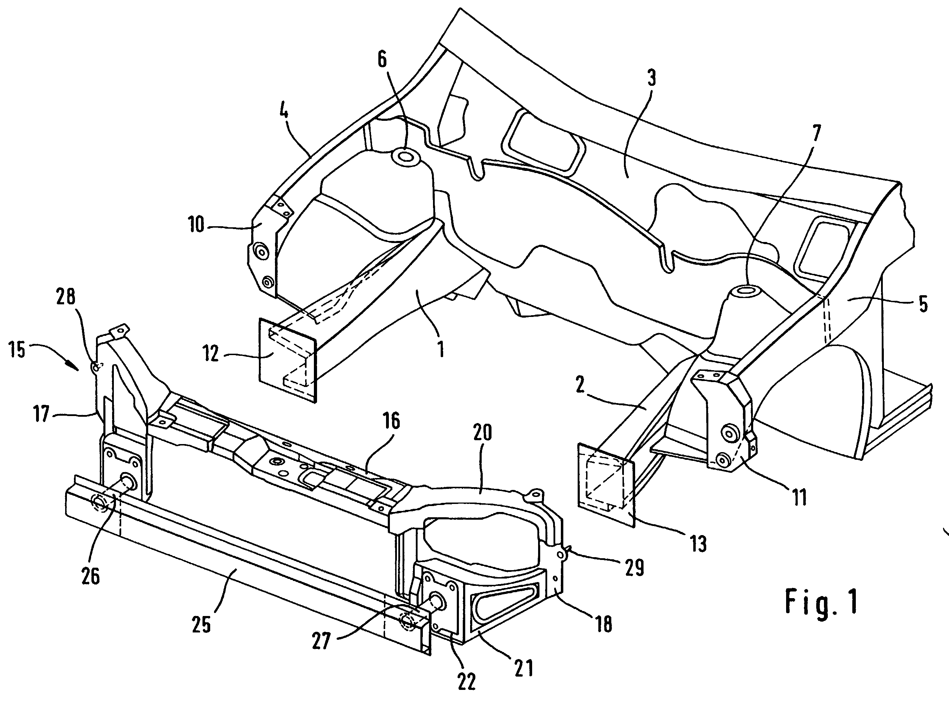

Zunächst wird auf die Figur 1 Bezug genommen. Diese zeigt in perspektivischer Sicht den Vorderbau eines Fahrzeuges. Aufbauend auf zwei Längsträgern 1, 2 besteht dieser aus einer Spritzwand 3 und zwei Seitenwänden 4, 5. Zwischen einem Längsträger 1, 2 und einer Seitenwand 4, 5 befindet sich jeweils ein Stoßdämpferaufnahmedom 6, 7. Die Längsträger 1, 2 enden jeweils in einer Abschlußplatte 12, 13.

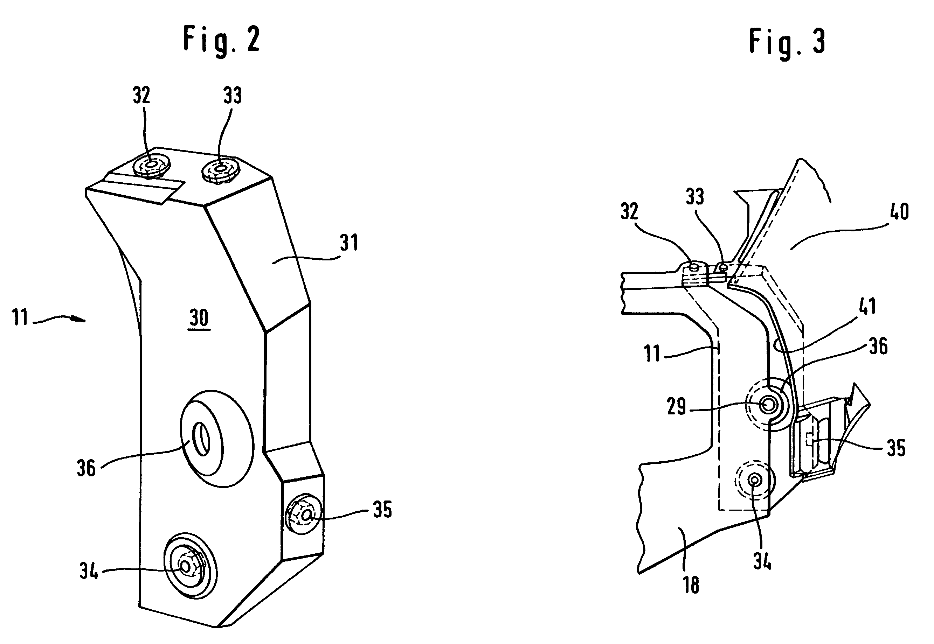

An dem vorderen Ende einer Seitenwand 4, 5 befindet sich jeweils eine Verbindungsplatte 10, 11, die in der Figur 2 näher dargestellt ist. Jede Verbindungsplatte 10, 11 ist mit der ihr zugeordneten Seitenwand verschweißt und weist mehrere Verschraubungsmöglichkeiten auf.

Der Vorderbau des Fahrzeuges wird nach vorne durch eine Quertraverse 15 geschlossen. Diese besteht aus einem Mittelteil 16 und zwei Seitenteilen 17, 18 für die Aufnahme der beiden Fahrzeugscheinwerfer. Jedes Seitenteil wird von einem Rahmen 20 für einen Scheinwerfer und einem darunter angeordneten Anschlußteil 21 mit einem flächigen Bereich 22 gebildet. An der Innenseite dieses Bereichs werden bei der Montage der Quertraverse die Abschlußplatten 12, 13 angelegt und fixiert. An der Außenseite wird ein Stoßfängerträger 25 mittels Deformationselementen 26, 27 befestigt, wobei eine Befestigungsplatte des jeweiligen Deformationselements mit dem flächigen Bereich 22 des jeweiligen Seitenteils 17, 18 verschraubt oder verschweißt ist.

An den beiden Außenseiten der Quertraverse 15 ist jeweils ein Führungsstift 28, 29 vorgesehen, der beim Zusammenbau der Teile in eine entsprechende Aufnahme in der zugehörigen Verbindungsplatte eingeführt wird.

Die Figur 2 gibt eine Detaildarstellung dieser Verbindungsplatte 10 (bzw. 11) wieder. Diese besteht aus einer Grundplatte 30, die stumpf am Ende der jeweiligen Seitenwand anliegt. An der Grundplatte 30 schließt sich nach hinten ein Seitenband 31 an, das sich entlang der oberen und der Kante der Grundplatte 30 erstreckt. Im oberen Abschnitt des Seitenbandes 31 befindet sich ein Schraubpunkt 32 für das eine Seitenteil 18 der Quertraverse sowie ein Schraubpunkt 33 für ein Kotflügelblech 40. Ein weiterer Schraubpunkt 34 für das Seitenteil befindet sich im unteren Teil der Grundplatte 30, ein weiterer Schraubpunkt 35 für das Kotflügelblech im unteren Bereich des Seitenbandes 31. Die Schraubpunkte werden durch angeschweißte Muttern realisiert. Im mittleren Bereich der Grundplatte 30 befindet sich eine Führungsöffnung 36 für den Führungsstift 29 am Seitenteil 18.

Wie Figur 3 zeigt, wird der Kotflügel 40 an den für ihn vorgesehenen Schraubpunkten 33, 35 befestigt, die Quertraverse 15 in den anderen Schraubpunkten 32, 34.

Entscheidend ist aber, daß durch die Befestigung des Kotflügels und der Quertraverse 15 an einem Bauteil, nämlich der Verbindungsplatte 10 (bzw. 11), eine exakte Ausrichtung der beiden Elemente zueinander gewährleistet ist, insbesondere bildet die vordere Kante 41 des Kotflügelblechs 40 einen Rahmen zu der nicht dargestellten Streuscheibe des Scheinwerfers mit einem geringen und gleichmäßigen Spaltmaß.

## Patentansprüche

1. Vorderbau eines Kraftfahrzeuges, das zwei Längsträger (1,2), zwei den Vorderbau des Fahrzeuges seitlich begrenzende Seitenwände (4,5) und daran angeschraubte äußere Kotflügelbleche (40) und eine an den Längsträgern befestigte Quertraverse (15) aufweist, die aus einem Mittelteil (16) und zwei mit dem Mittelteil verschraubten Seitenteilen (17,18) besteht, **dadurch gekennzeichnet, dass** an den vorderen Enden der Seitenwände (4, 5) Verbindungsplatten (10, 11) angeschweißt sind, dass jedes Seitenteil (17, 18) mit einem Führungsstift (28, 29) versehen ist, der in entsprechende Führungen (36) in der Verbindungsplatte (10, 11) eingeführt ist und dass sowohl die Seitenteile (17, 18) als auch die äußeren Kotflügelbleche (40) mit der jeweiligen Verbindungsplatte (10, 11) verschraubt sind.

2. Vorderbau nach Anspruch 1, **dadurch gekennzeichnet, dass** die Seitenteile (17, 18) mit den Längsträgern (1, 2) des Fahrzeuges verbunden sind.

3. Vorderbau nach Anspruch 2, **dadurch gekennzeichnet, dass** die Seitenteile (17, 18) mit den Längsträgern (1, 2) verschweißt sind und dass die Seitenteile (17, 18) und die Längsträger (1, 2) so eingerichtet sind, dass sie miteinander verschraubt werden können.

4. Vorderbau nach einem der vorhergehenden Ansprüche, **dadurch gekennzeichnet, dass** ein Stoßfängerträger (25) an den Seitenteilen (17, 18) befestigt ist.

5. Vorderbau nach Anspruch 4, **dadurch gekennzeichnet, dass** zwischen dem Stoßfängerträger (25) und den Seitenteilen (17, 18) Deformationselemente (26, 27) angeordnet sind.

6. Vorderbau nach einem der vorhergehenden Ansprüche, **dadurch gekennzeichnet, dass** die Verbindungsplatte (10) aus einer Grundplatte (30) besteht, an der sich nach hinten ein Seitenband (31) anschließt, an der sich ein Schraubpunkt (32) für das Seitenteil (17, 18) und ein Schraubpunkt (33) für das Kotflügelblech (40) befindet.

7. Vorderbau nach Anspruch 6, **dadurch gekennzeichnet, dass** sich ein weiterer Schraubpunkt (34) für das Seitenteil (17, 18) im unteren Teil der Grundplatte (30) befindet.

8. Verfahren zum Zusammenbau des Vorderbaus eines Fahrzeuges, das zwei Längsträger, zwei den Vorderbau des Fahrzeuges seitlich begrenzende Seitenwände (4, 5) und daran angeschraubte äußere Kotflügelbleche aufweist, und eine an den Längsträgern befestigte Quertraverse aufweist, die aus einem Mittelteil und zwei mit dem Mittelteil verschraubten Seitenteilen besteht, wobei an den vorderen Enden der Seitenwände (4, 5) Verbindungsplatten (10, 11) angeschweißt sind und wobei sowohl die Seitenteile (17, 18) als auch die äußeren Kotflügelbleche (40) mit der jeweiligen Verbindungsplatte (10, 11) verschraubt sind, das Verfahren weist die folgenden Schritte auf:
- in einem ersten Bauschritt wird aus dem Mittelteil (16) und den zwei Seitenteilen (17, 18) die Quertraverse (15) zusammengeschraubt;
- anschließend wird diese an den mit den Seitenwänden (4, 5) des Vorderbaus verschweißten Verbindungsplatten (10, 11) angesetzt, wobei Führungsmittel (28, 29) an den Seitenteilen (17, 18) und den Seitenwänden (4, 5) die Quertraverse (15) zum übrigen Vorderbau ausrichten;
- danach wird die Quertraverse (15) an den Längsträgern (1, 2) befestigt.

9. Verfahren nach Anspruch 8, **dadurch gekennzeichnet, dass** die Führungsmittel aus einem Führungsstift (28, 29) an jedem Seitenteil (17, 18) und einer entsprechenden Führung (36) an der Verbindungsplatte (10, 11) bestehen, in der der Führungsstift (18, 29) eingeführt wird.

10. Verfahren nach Anspruch 8 oder 9, **dadurch gekennzeichnet, dass** die Quertraverse (15) nach dem Lackieren der Karosserie mit den Verbindungsplatten (10, 11) verschraubt wird.

11. Verfahren zur Reparatur einer teilbeschädigten, aus mehreren Teilstücken zusammengeschraubten Quertraverse nach Anspruch 3, wobei ein beschädigtes Seitenteil entnommen und durch ein baugleiches Ersatzseitenteil ersetzt wird, **dadurch gekennzeichnet, dass** die Schraubverbindungen des beschädigten Seitenteiles zum Mittelteil und zur jeweiligen Verbindungsplatte (10, 11) gelöst werden, dass die Verschweißungspunkte mit dem zugehörigen Längsträger aufgebohrt werden und danach das Ersatzseitenteil mit dem Längsträger (1, 2) verschraubt wird.

## Claims

1. Front part of a motor vehicle, which has two longitudinal members (1, 2), two side panels (4, 5) laterally defining the front part of the vehicle and outer wing panels (40) bolted thereto, and a crossbar (15) attached to the longitudinal members and consisting of a central portion (16) and two side portions (17, 18) bolted to the central portion, **characterised in that** connecting plates (10, 11) are welded to the front ends of the side panels (4, 5), **in that** each side portion (17, 18) is provided with a guide pin (28, 29) which is introduced into corresponding guides (36) in the connecting plate (10, 11) and **in that** both the side portions (17, 18) and the outer wing panels (40) are bolted to the respective connecting plate (10, 11).

2. Front part according to claim 1, **characterised in that** the side portions (17, 18) are connected to the longitudinal members (1, 2) of the vehicle.

3. Front part according to claim 2, **characterised in that** the side portions (17, 18) are welded to the longitudinal members (1, 2) and **in that** the side portions (17, 18) and the longitudinal members (1, 2) are designed in such a way that they can be bolted to each other.

4. Front part according to any of the preceding claims, **characterised in that** a bumper carrier (25) is attached to the side portions (17, 18).

5. Front part according to claim 4, **characterised in that** between the bumper carrier (25) and the side portions (17, 18) are arranged deformation elements (26, 27).

6. Front part according to any of the preceding claims, **characterised in that** the connecting plate (10) consists of a main plate (30) which is adjoined at the rear by a side strip (31) on which are located a bolting point (32) for the side portion (17, 18) and a bolting point (33) for the wing panel (40).

7. Front part according to claim 6, **characterised in that** a further bolting point (34) for the side portion (17, 18) is located in the lower portion of the main plate (30).

8. Method for assembling the front part of a vehicle which has two longitudinal members, two side panels (4, 5) laterally defining the front part of the vehicle and outer wing panels bolted thereto, and a crossbar attached to the longitudinal members and consisting of a central portion and two side portions bolted to the central portion, wherein connecting plates (10, 11) are welded to the front ends of the side panels (4, 5) and wherein both the side portions (17, 18) and the outer wing panels (40) are bolted to the respective connecting plate (10, 11), the method has the following steps:
- in a first building step from the central portion (16) and the two side portions (17, 18) the crossbar (15) is bolted together;
- next the latter is attached to the connecting plates (10, 11) welded to the side panels (4, 5) of the front part, wherein guide means (28, 29) on the side portions (17, 18) and the side panels (4, 5) align the crossbar (15) with the remainder of the front part;
- then the crossbar (15) is attached to the longitudinal members (1, 2).

9. Method according to claim 8, **characterised in that** the guide means consist of a guide pin (28, 29) on each side portion (17, 18) and a corresponding guide (36) on the connecting plate (10, 11) in which the guide pin (18, 29) is introduced.

10. Method according to claim 8 or 9, **characterised in that** the crossbar (15) is bolted to the connecting plates (10, 11) after painting of the body.

11. Method for the repair of a partially damaged crossbar bolted together from several sections according to claim 3, wherein a damaged side portion is removed and replaced by a replacement side portion having the same construction, **characterised in that** the bolted connections of the damaged side portion to the central portion and to the respective connecting plate (10, 11) are undone, **in that** holes are drilled in the welding points with the associated longitudinal member, and then the replacement side portion is bolted to the longitudinal member (1, 2).

## Revendications

1. Structure avant d'un véhicule automobile qui présente deux longerons (1, 2), deux parois latérales (4, 5) limitant latéralement la structure avant du véhicule et des tôles d'aile extérieures (40) vissées dessus et une traverse avant (15) fixée sur les longerons, qui se compose d'une partie centrale (16) et de deux parties latérales (17, 18) vissées avec la partie centrale, **caractérisée en ce que** des plaques d'assemblage (10, 11) sont soudées aux extrémités avant des parois latérales (4, 5), **en ce que** chaque partie latérale (17, 18) est munie d'un goujon de guidage (28, 29) qui est introduit dans les guidages correspondants (36) dans la plaque d'assemblage (10, 11) et **en ce que** non seulement les parties latérales (17, 18) mais aussi les tôles d'aile extérieures (40) sont vissées avec la plaque d'assemblage respective (10, 11).

2. Structure avant selon la revendication 1, **caractérisée en ce que** les parties latérales (17, 18) sont assemblées avec les longerons (1, 2) du véhicule.

3. Structure avant selon la revendication 2, **caractérisée en ce que** les parties latérales (17, 18) sont soudées avec les longerons (1, 2) et **en ce que** les parties latérales (17, 18) et les longerons (1, 2) sont disposés de manière à ce qu'ils puissent être vissés ensemble.

4. Structure avant selon l'une quelconque des revendications précédentes, **caractérisée en ce qu'**un support de bouclier (25) est fixé aux parties latérales (17, 18).

5. Structure avant selon la revendication 4, **caractérisée en ce que** des éléments de déformation (26, 27) sont disposés entre le support de bouclier (25) et les parties latérales (17, 18).

6. Structure avant selon l'une quelconque des revendications précédentes, **caractérisée en ce que** la plaque d'assemblage (10) se compose d'une plaque de base (30) à laquelle est attachée une bande latérale (31) sur l'arrière, sur laquelle se trouve un point de vissage (32) pour la partie latérale (17, 18) et un point de vissage (33) pour la tôle d'aile (40).

7. Structure avant selon la revendication 6, **caractérisée en ce qu'**un autre point de vissage (34) pour la partie latérale (17, 18) se trouve dans la partie inférieure de la plaque de base (30).

8. Procédé pour l'assemblage de la structure avant d'un véhicule qui présente deux longerons, deux parois latérales (4, 5) limitant latéralement la structure avant du véhicule et des tôles d'aile extérieures vissées dessus, et qui présente une traverse avant fixée aux longerons, ladite traverse se composant d'une partie centrale et de deux parties latérales vissées avec la partie centrale, des plaques d'assemblage (10, 11) étant soudées aux extrémités avant des parois latérales (4, 5) et non seulement les parties latérales (17, 18) mais aussi les tôles d'aile extérieures (40) étant vissées avec la plaque d'assemblage (10, 11) respective, le procédé présente les phases suivantes :
dans une première phase de construction, la traverse avant (15) est vissée à partir de la partie centrale (16) et les deux parties latérales (17, 18) ;
puis, celle-ci est posée sur les plaques d'assemblage (10, 11) soudées avec les parois latérales (4, 5) de la structure avant, les moyens de guidage (28, 29) sur les parties latérales (17, 18) et sur les parois latérales (4, 5) orientant la traverse avant (15) par rapport au reste de la structure avant ;
ensuite, la traverse avant (15) est fixée aux longerons (1, 2).

9. Procédé selon la revendication 8, **caractérisé en ce que** les moyens de guidage se composent d'un goujon de guidage (28, 29) sur chaque partie latérale (17, 18) et d'un guidage correspondant (36) sur la plaque d'assemblage (10, 11), dans laquelle le goujon de guidage (28, 29) est introduit.

10. Procédé selon la revendication 8 ou 9, **caractérisé en ce que** la traverse avant (15) est vissée avec les plaques d'assemblage (10, 11) après le laquage de la carrosserie.

11. Procédé de réparation d'une traverse avant partiellement endommagée vissée composée de plusieurs pièces selon la revendication 3, une partie latérale endommagée étant retirée et remplacée par une partie latérale de rechange identique, **caractérisé en ce que** les raccords à vis de la partie latérale endommagée sont desserrés au niveau de la partie centrale et de la plaque d'assemblage (10, 11) respective, **en ce que** les points de soudure sont alésés avec le longeron correspondant, puis la partie latérale de rechange est vissée avec le longeron (1, 2).
